# EUROPÄISCHE PATENTSCHRIFT

(11) **EP 2 100 834 B1**
(45) Veröffentlichungstag und Bekanntmachung des Hinweises auf die Patenterteilung: **15.08.2012**
(21) Anmeldenummer: 09075225.4
(22) Anmeldetag: 28.10.2004
(51) Int. Cl.: B65G 47/91, A24C 5/352

(54) **Handhabungsvorrichtung zum Transportieren von mit Artikeln gefüllten und/oder zu befüllenden Behältern**
Handheld device for transporting containers filled and/or to be filled with products
Dispositif de manipulation destiné au transport de récipients remplis et/ou devant être remplis d'articles

(30) Priorität: 25.11.2003 DE 10355876
(43) Veröffentlichungstag der Anmeldung: 16.09.2009
(62) Teilanmeldung aus: 04820389.7
(73) Patentinhaber: Hauni Maschinenbau AG, 21033 Hamburg (DE)
(72) Erfinder: Kägeler, Peter, 21502 Geesthacht (DE); Budny, Piotr, 21035 Hamburg (DE)
(74) Vertreter: Stork Bamberger

(56) Entgegenhaltungen:
- EP-A- 0 143 897
- EP-A- 1 106 086
- EP-A- 1 308 101
- DE-A1- 1 632 196
- DE-A1- 3 917 097
- US-A1- 2001 046 436
- US-B1- 6 290 448

## Beschreibung

Die Erfindung betrifft eine Handhabungsvorrichtung, im Wesentlichen umfassend einen Handhabungsarm, der in mehreren Freiheitsgraden bewegbar ausgebildet ist, ein Greifelement, das am freien Ende des Handhabungsarms bewegbar angeordnet ist und mindestens eine Linearführung mit einem auf der Linearführung bewegbaren Tragelement sowie ein Halteelement für die Behälter aufweist, und einen Antrieb zum Bewegen des Tragelementes, wobei das Greifelement derart ausgebildet ist, dass Behälter an glatten Teilflächen ihrer aus einem Speicher weisenden Schmalseite greifbar sind, wobei das Greifelement mindestens einen, vorzugsweise zwei Saugnäpfe, insbesondere zum Ziehen der Behälter aufweist.

Derartige Handhabungsvorrichtungen kommen insbesondere in der Tabak verarbeitenden Industrie zum Einsatz. Häufig müssen Artikel aus unterschiedlichen Gründen aus der Verarbeitung ausgeschleust und zu einem späteren Zeitpunkt wieder in die Verarbeitung eingeschleust werden. Es besteht beispielsweise die Notwendigkeit, Filter vor der Verbindung mit einem Tabakstock oder dergleichen auszuhärten. In einem anderen Beispiel muß ein Überangebot an Zigaretten zwischengespeichert werden. Die Filter, Zigaretten oder anderen Artikel werden zu diesem Zweck an einer Befüllungsstation in Behälter, sogenannte Schragen, gefüllt und mit der Handhabungsvorrichtung in einen Speicher transportiert. Für den Fall, dass die in den Schragen gepufferten Artikel wieder in die Verarbeitung eingeschleust werden sollen, müssen die Schragen aus den Speichern entnommen und einer Entleerungsstation zugeführt werden.

Bei bekannten Anordnungen sind die Speicher im Bereich der den Füllstand der Behälter verändernden Vorrichtungen angeordnet, wobei die Anordnung derart offen gestaltet ist, dass die Handhabungsvorrichtung auch während des Betriebes zugänglich ist. Auch sind die Speicher und die Vorrichtungen zum Verändern des Füllstandes der Behälter so angeordnet, dass ein komplexer Bewegungsablauf der Handhabungsvorrichtung mit weiten Transportwegen erforderlich ist. Die bekannten Handhabungsvorrichtungen zum Transfer der Behälter sind jeweils für speziell angepaßte Behälter einsetztbar.

Die bekannten Handhabungsvorrichtungen für den Transfer der Behälter weisen den Nachteil auf, dass sie nur begrenzt einsetzbar sind bzw. konstruktiv sehr aufwendig sind, um an unterschiedliche Behälterformen und -abmessungen adaptiert werden zu können.

Es ist daher Aufgabe der vorliegenden Erfindung, eine leicht handhabbare und universell einsetzbare Handhabungsvorrichtung zu schaffen.

Die Aufgabe wird durch eine Handhabungsvorrichtung mit den Merkmalen der eingangs genannten Art dadurch gelöst, dass das Greifelement mindestens ein, vorzugsweise zwei Pufferelemente, insbesondere zum Drücken der Behälter, aufweist, wobei jeder Saugnapf und jedes Pufferelement am Tragelement auf der den Behältern zugewandten Seite angeordnet ist, und dass am Tragelement ein den Boden der Behälter abstützendes Stützelement angeordnet ist, wobei das Stützelement bewegbar ausgebildet ist. Dadurch ist eine flexible Verwendung der Handhabungsvorrichtung sichergestellt, und zwar im Wesentlichen unabhängig von der Gestalt und Form üblicher Behälter. Mit den Saugnäpfen und den Pufferelementen müssen die Behälter zum Transport nur minimale Anforderungen, nämlich eine kleine Angriffsfläche, erfüllen, die jeder übliche Behälter aufweist, so dass sämtliche üblichen Behälterformen mit der Handhabungsvorrichtung transportierbar sind, und zwar ohne zusätzlichen konstruktiven Aufwand.

Vorzugsweise weist das Greifelement an der den Behältern zugewandten Seite Elemente zum Drücken und/oder Schieben der Behälter auf. Dadurch kann auf zusätzliche Greif- und/oder Befestigungselemente verzichtet werden, so dass der Aufbau der Handhabungsvorrichtung vereinfacht ist. Auch ermöglicht diese Ausbildung besonders einfach den universellen Einsatz.

Weitere vorteilhafte und bevorzugte Merkmale und Ausführungsformen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Darstellung einer Anordnung mit vier Speichern,
- Fig. 2: eine perspektivische Ansicht von Teilen der in Figur 1 gezeigten Anordnung,
- Fig. 3: eine Einheit aus einer Vorrichtung zum Entleeren von Behältern und einer Vorrichtung zum Befüllen von Behältern,
- Fig. 4: eine Draufsicht auf eine Anordnung gemäß Figur 1,
- Fig. 5a + b): perspektivische Ansichten eines an einem Schleusenelement angedockten Rollwagens von schräg hinten und schräg vorne mit geöffnetem Schleusenelement,
- Fig. 6a + b): perspektivische Ansichten eines vom Schleusenelement abgekoppelter Rollwagens von schräg hinten und schräg vorne mit geschlossenem Schleusenelement,
- Fig. 7: eine perspektivische Ansicht eines Rollwagens mit drei Ebenen mit je sieben Behälterfächern,
- Fig. 8: eine perspektivische Ansicht eines Containerwagens mit drei Containern,
- Fig. 9a + b + c: eine Vorderansicht, eine Seitenansicht und eine Draufsicht eines Speichers,
- Fig. 10a + b + c: die Ansichten des Speicherelementes gemäß der Figuren 9a bis c) mit einem führerlosen Transportfahrzeug unterhalb des Speichers,

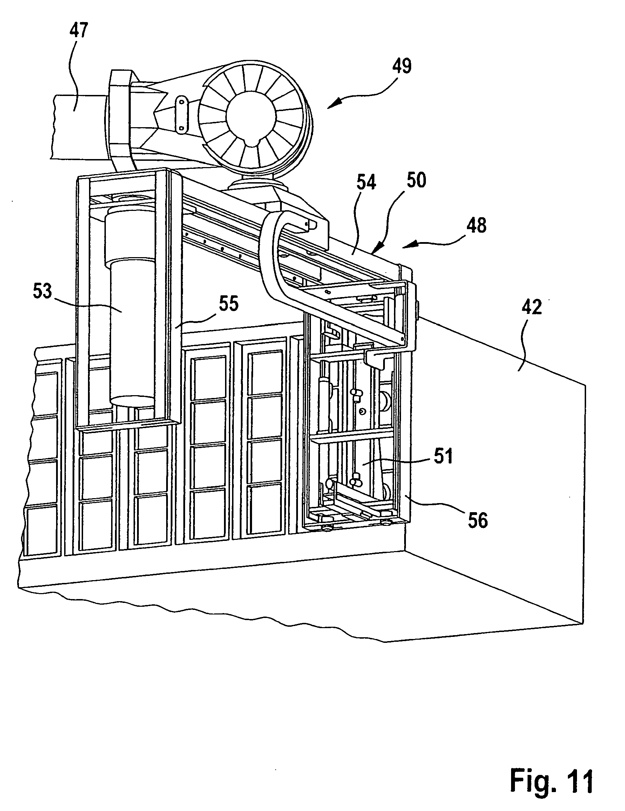

- Fig.11: eine vergrößerte Darstellung eines Greifelementes,
- Fig. 12a + b): eine Draufsicht bzw. eine Seitenansicht des Greifelementes an einem Behälter in einem Container,
- Fig. 13a + b): eine Draufsicht bzw. eine Seitenansicht des Greifelementes gemäß Figur 10 mit einem aus dem Container entnommenen Behälter,
- Fig. 14: eine perspektivische Darstellung des Greifelementes von schräg vorne,
- Fig. 15: eine Seitenansicht des Greifelementes gemäß Figur 12,
- Fig. 16: Details eines Greifelementes,

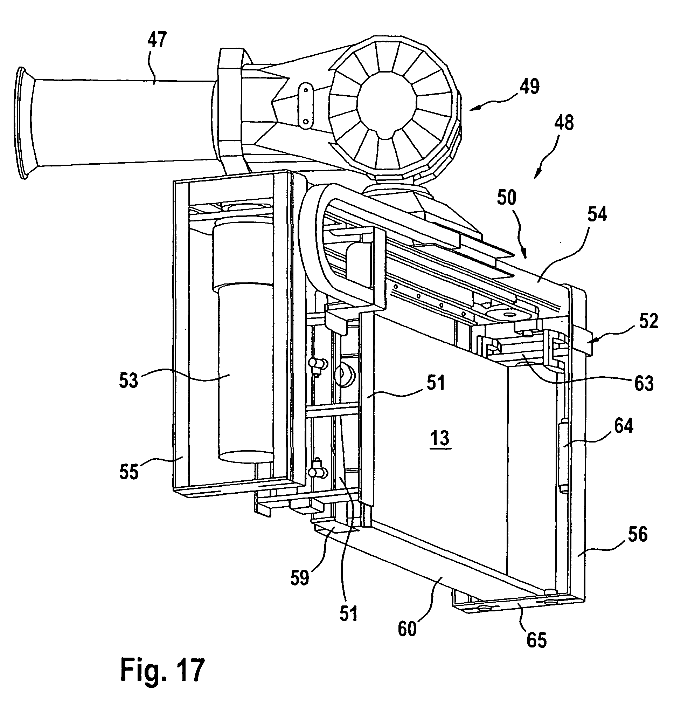

- Fig. 17: eine perspektivische Ansicht des Greifelementes während des Transports eines Behälters,

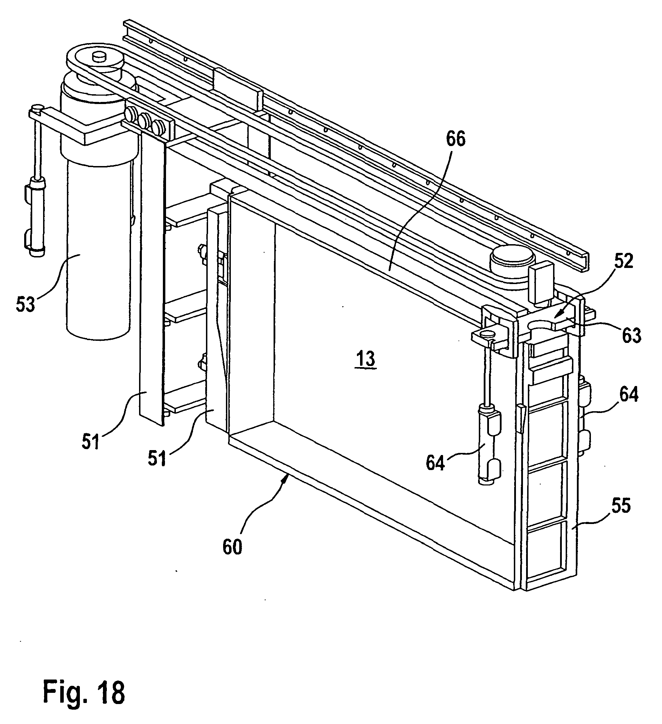

- Fig. 18: eine weitere Ausführungsform eines Greifelementes,
- Fig. 19: eine weitere Ausführungsform eines Greifelementes,
- Fig. 20: eine Draufsicht auf das Greifelement gemäß Figur 15 im Teilschnitt,
- Fig. 21: eine Seitenansicht des Greifelementes gemäß Figur 15,

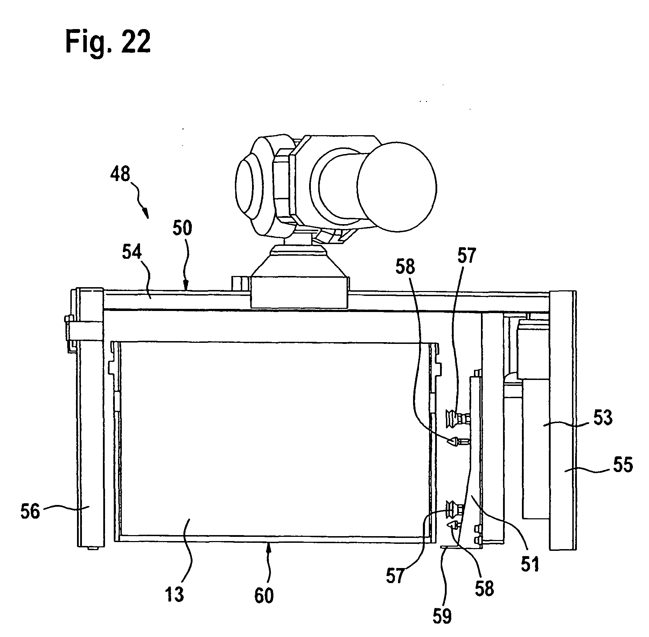

- Fig. 22: eine Seitenansicht des Greifelementes gemäß Figur 19 mit gerade gelöstem Behälter, und
- Fig. 23a: + b) eine Draufsicht bzw. Seitenansicht einer weiteren Ausführungsform eines Greifelementes mit beweglichem Stützelement.

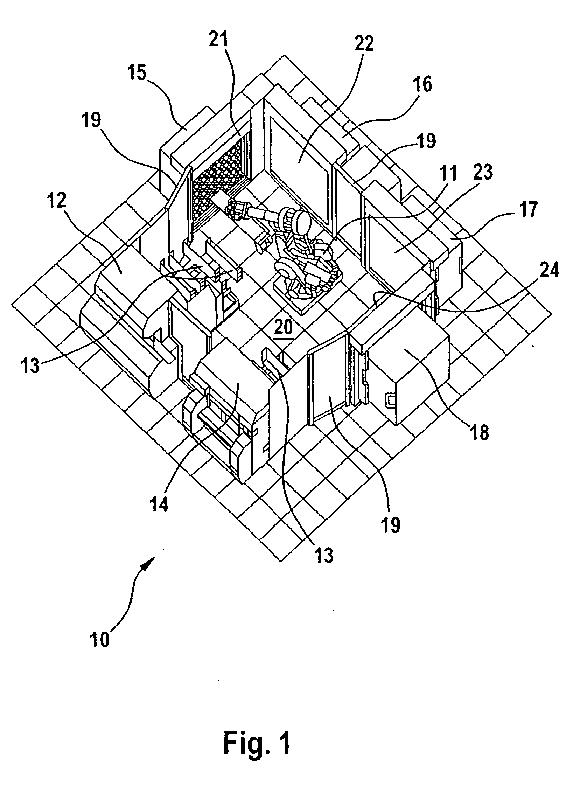

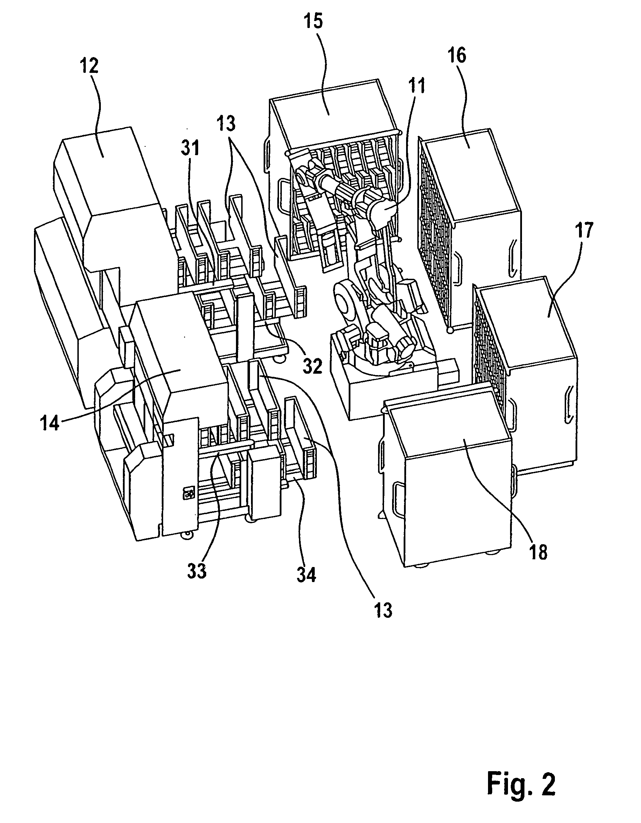

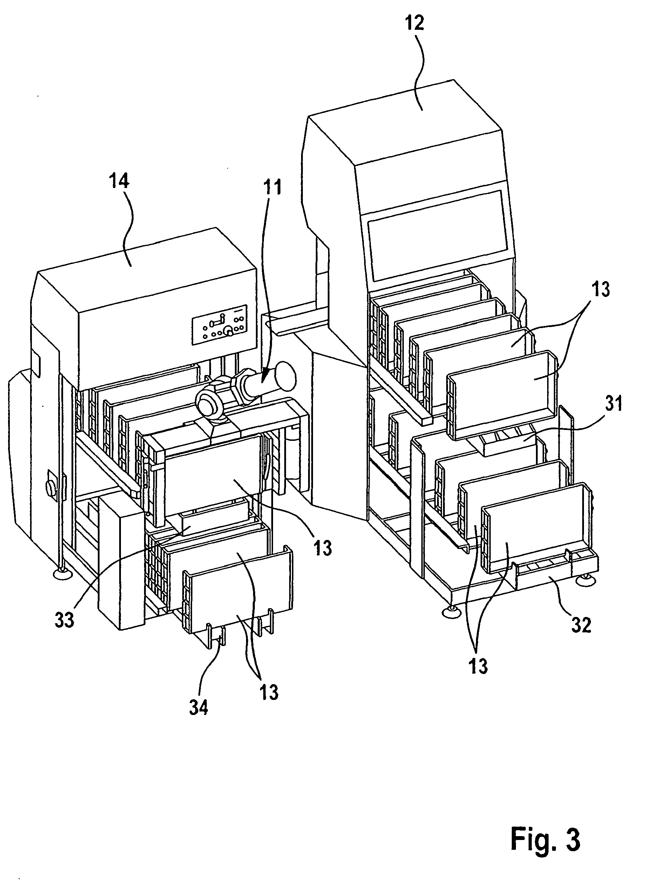

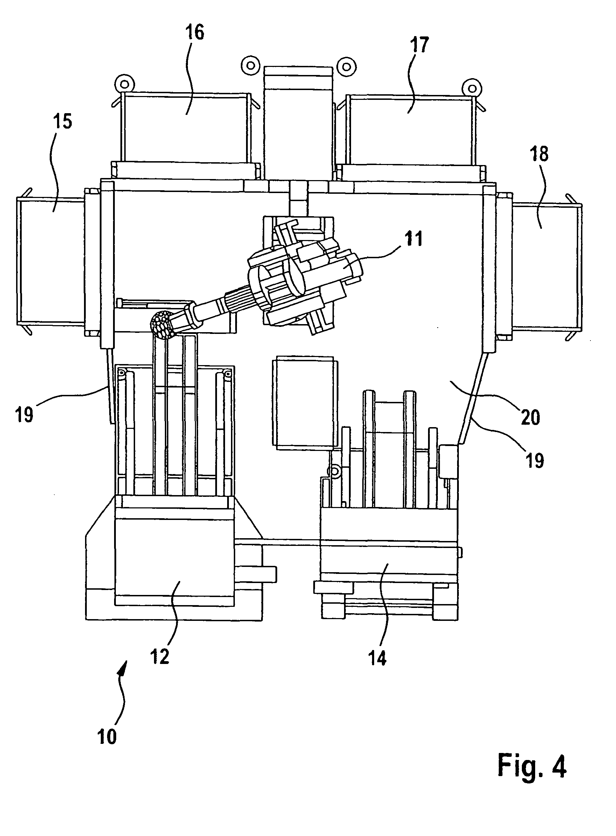

Die in den Figuren 1 bis 10b gezeigten Anordnungen, die nicht unter den Schutz der Ansprüche fallen, dienen zum Entleeren, Befüllen und Speichern von mit Artikeln gefüllten oder zu befüllenden Behältern. Die erfindungsgemäße Handhabungsvorrichtung als universelles Greif-System ist in der gezeigten Ausführungsform Bestandteil der Anordnung und dient zum Transfer der Behälter zwischen den einzelnen Komponenten der Anordnung.

In der Figur 1 ist eine Anordnung 10 gezeigt, die im wesentlichen aus einer zentralen Handhabungsvorrichtung 11, einer Vorrichtung 12 zum Entleeren von Behältern 13, einer Vorrichtung 14 zum Befüllen von Behältern 13 sowie vier Speichern 15, 16, 17, 18 gebildet ist, wobei die Vorrichtungen 12 und 13 sowie die Speicher 15 bis 18 durch Zaunelemente 19 zur Bildung eines Arbeitsraumes 20 miteinander verbunden sind. Die Handhabungsvorrichtung 11 ist innerhalb des Arbeitsraumes 20 angeordnet und damit nach außen hin abgeschirmt. Der Arbeitsraum 20 bildet quasi eine in sich geschlossene Zelle, innerhalb der die Handhabungsvorrichtung 11 mit mehreren Freiheitsgraden verfahrbar, verschwenkbar oder in anderer Weise bewegbar ist. Alternativ kann die Anzahl der den Füllstand der Behälter 13 verändernden Vorrichtungen 12 und 14 zum Entleeren bzw. Befüllen der Behälter 13 sowie die Anzahl der Speicher 15 bis 18 variieren.

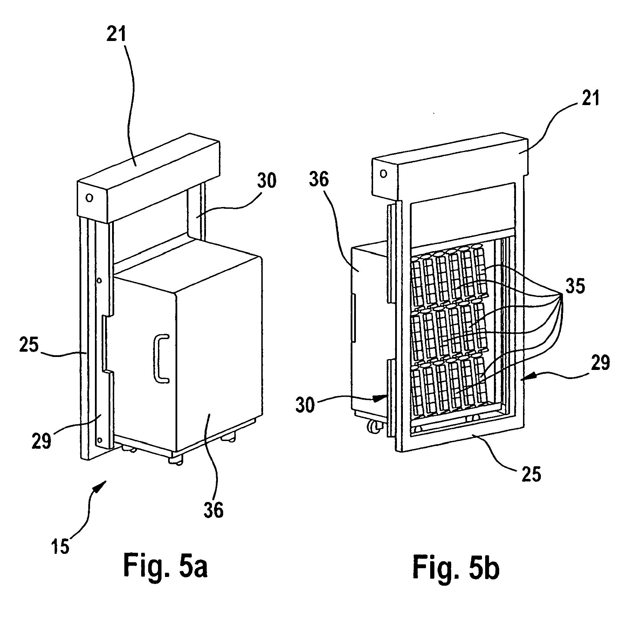

Die Speicher 15 bis 18 sind an ihren nach innen, der Handhabungsvorrichtung 11 bzw. dem Arbeitsraum 17 zugewandten Seite verschließbar ausgebildet. Hierzu ist jedem Speicher 15 bis 18 ein Schleusenelement zugeordnet, das z.B. als Rolltor 21, 22, 23, 24 ausgebildet sein kann. Die Rolltore 21 bis 24 lassen sich öffnen und wieder verschließen, um den Speicher 15 bis 18 jeweils vom Arbeitsraum 17 abzukoppeln. In Figur 1 ist das Rolltor 21 geöffnet, während die Rolltore 22 bis 24 geschlossen sind. Die Speicher 15 bis 18 sind an die Schleusenelemente bzw. die Rolltore 21 bis 24 ankoppelbar und wieder abkoppelbar, um die Speicher 15 bis 18 ggf. austauschen zu können. Die Speicher 15 bis 18 sind an einem Rahmen 25, 26, 27, 28 der Rolltore 21 bis 24 fixierbar, um insbesondere während des Betriebes der Anordnung 10 eine sichere Positionierung gewährleisteten zu können. Die Fixierung wird mittels seitlich am Rahmen 25 bis 28 angeordneter Platten-Elementen 29, 30 (siehe z.B. Figuren 5a und 5b) realisiert. Die Platten-Elemente 29, 30 sind schwenkbar ausgebildet und ermöglichen eine Fixierung sowohl tangential als auch senkrecht zur Öffnung des Rolltores 21 bis 24, wenn die Platten-Elemente 29, 30 nach außen geschwenkt sind.

Die Vorrichtungen 12 und 14 sind nebeneinander angeordnet. Der Vorrichtung 12 zum Entleeren der Behälter 13 ist eine obere Bandstation 31 und eine untere Bandstation 32 vorgeschaltet. Die Bandstation 31 dient zum Ablegen voller Behälter 13 und Zuführen derselben an die Vorrichtung 12. Die Bandstation 32 dient zum Ablegen der in der Vorrichtung 12 entleerten Behälter 13 und Abführen derselben von der Vorrichtung 12. Die Vorrichtung 14 zum Befüllen der Behälter 13 ist analog mit einer oberen Bandstation 33 und einer unteren Bandstation 34 ausgestattet, wobei die Bandstation 33 zum Ablegen leerer Behälter 13 und Zuführen derselben an die Vorrichtung 14 und die Bandstation 34 zum Ablegen der in der Vorrichtung 14 gefüllten Behälter 13 und Abführen derselben von der Vorrichtung 14 dient. Die Bandstationen 31 bis 34 sind alle gleich ausgerichtet und zwar derart, dass die Behälter 13 quer zu ihrer Längserstreckung, also mit einer Breitseite voraus, förderbar sind.

Jeder Vorrichtung 12 und 14 sind in der gezeigten Ausführungsform zwei Speicher 15, 16 und 17, 18 zugeordnet. Die Speicher 15 und 18 sind der Vorrichtung 12 bzw. 14 um 90° versetzt zugeordnet. Das bedeutet, dass die Ausrichtung der Behälter 13 in den Speichern 15 und 18 und auf den Bandstationen 31 bis 34 gleich ist. Die Speicher 16 bzw. 17 sind gegenüber den Speichern 15 und 18 um 90° versetzt angeordnet und stehen auf der den Vorrichtungen 12, 14 gegenüberliegenden Seite der Handhabungsvorrichtung 11. Die Vorrichtungen 12 und 14 können jeweils als sogenannte "Top-Lader" mit einem Zugang für die Behälter 13 von oben oder als "Front-Lader" mit einem Zugang für die Behälter 13 von vorne bzw. von der Seite ausgebildet sein.

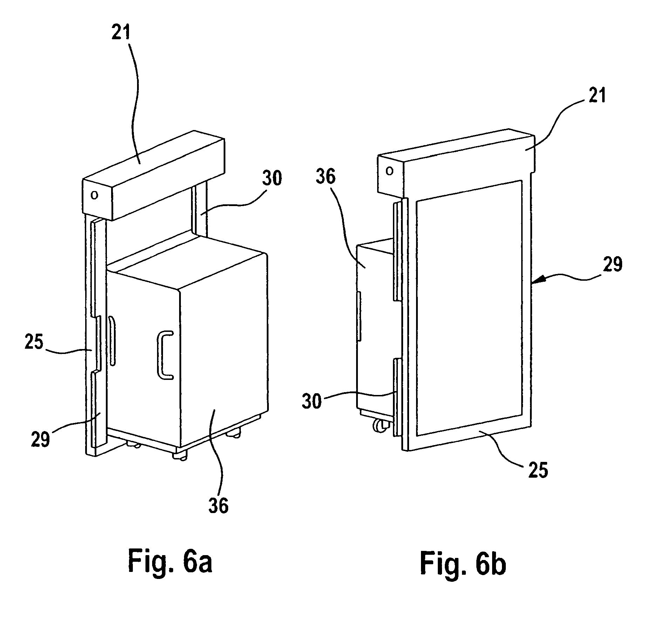

Die Speicher 15 bis 18 sind wahlweise stationär oder mobil ausgebildet. Als stationäre Speicher kommen z.B. feste Gestelle in Betracht, die Fächer 35 zur Aufnahme der Behälter 13 aufweisen. In einer anderen nicht dargestellten Ausführungsform sind ortsfeste Container in einem Regallager angeordnet, die z.B. auch mit einer Bandstation zur Bereitstellung der Behälter in den Greifbereich der Handhabungsvorrichtung 11 versehen sein können. In den Figuren 5 bis 10 sind unterschiedliche mobile Speicher 15 bis 18 gezeigt. Figur 5a zeigt einen Rollwagen 36, der auch Schragenwagen genannt wird. Der Rollwagen 36 ist an ein Rolltor 21 im Bereich des Rahmens 25 angekoppelt und durch die Platten-Elemente 29, 30 fixiert. Das Rolltor 21 ist geöffnet (siehe Figur 5b). Die geschlossene Position des Rolltors 21 ergibt sich aus der Figur 6b. In der Figur 6 ist der Rollwagen 36 vom Rolltor 21 abgekoppelt. Das Rolltor 21 kann sich in unterschiedlichen Zuständen befinden, nämlich zum einen in einer vollständig geschlossenen Position gemäß Figur 6b. In dieser Position kann der Rollwagen 36 abgeführt oder ein neuer Rollwagen 36 angedockt werden. Zum anderen kann das Rolltor 21 mit seiner Unterkante auf dem Rollwagen 36 quasi bündig aufliegen (siehe Figur 5b), so dass der Rollwagen 36 abgearbeitet werden kann. In einer (nicht dargestellten) weiteren Position ist die Unterkante des Rolltores 21 maximal nach oben gefahren. Diese Position ist für die Betriebsunterbrechung der Anordnung 10 vorgesehen, um in die Zelle bzw. den Arbeitsraum 20 eintreten zu können.

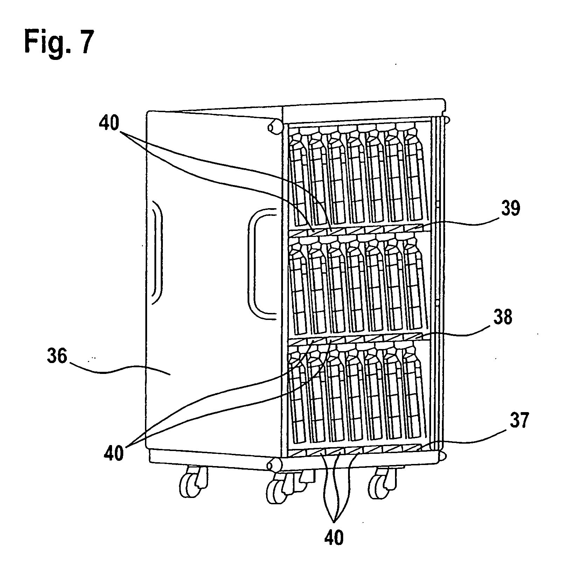

Der Rollwagen 36 (z.B. gemäß Figur 7) weist drei Ebenen 37, 3 8, 39 auf, auf denen jeweils sieben Fächer 35 angeordnet sind. Die Fächer 35 sind mit einem leicht geneigten Bodenelement 40 versehen, um eine Herausfallen der Artikel aus den teilweise geöffneten Behältern 13 zu verhindern. Des weiteren sind die Fächer 35 derart ausgebildet, dass die in den Fächern 35 angeordneten Behälter 13 bodenseitig, also auf der den Bodenelementen 40 zugewandten Seite, für die Handhabungsvorrichtung 11 zugänglich sind.

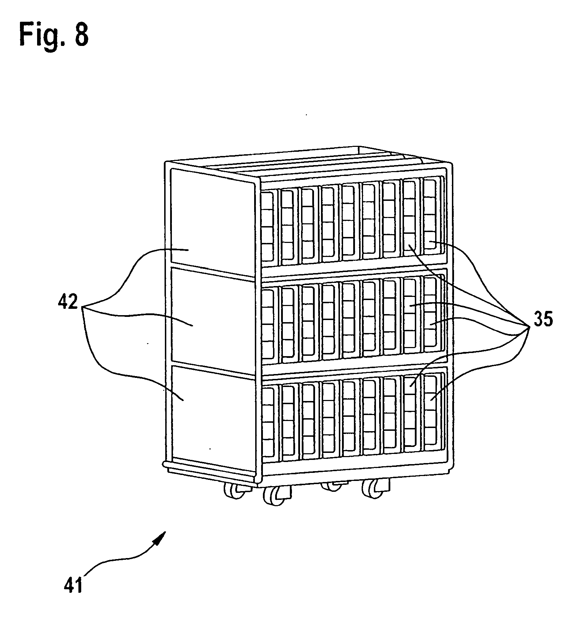

Die Figur 8 zeigt einen Containerwagen 41, der in der gezeigten Ausführungsform drei Container 42 aufweist. Die Container 42 können fest oder lose am Containerwagen 41 angeordnet sein. Die Fächer 35 der Container 42 sind derart ausgebildet, dass die in den Fächern 35 angeordneten Behälter 13 bodenseitig für die Handhabungsvorrichtung 11 nicht zugänglich sind, so dass eine Unterstützung der Behälter 13 erst nach dem teilweisen Herausziehen derselben möglich ist.

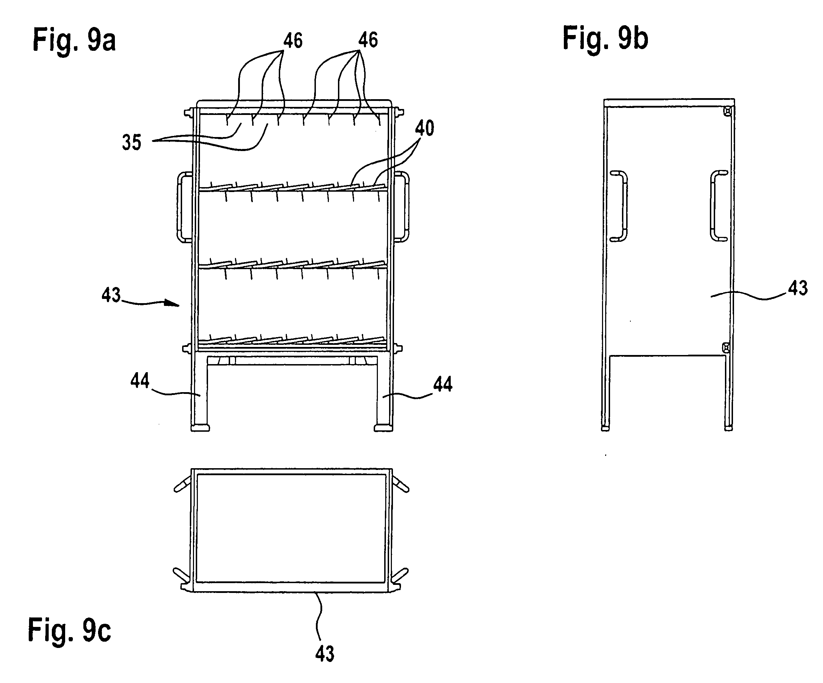

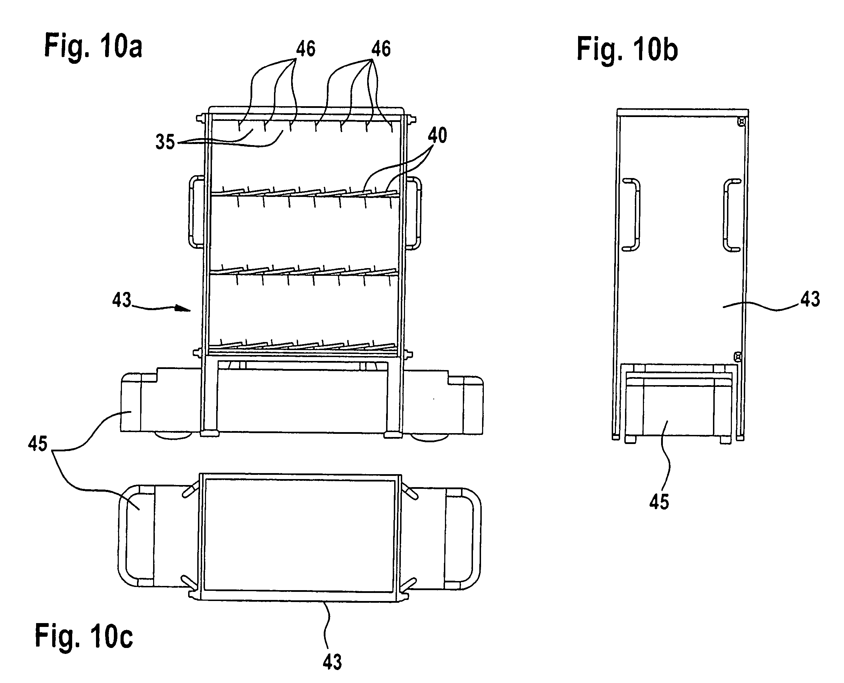

Weitere Ausführungsformen der Speicher 15 bis 18 sind in den Figuren 9 und 10 dargestellt. Die darin gezeigten Speicher sind als Behältergestelle 43 ähnlich wie die Rollwagen 36 aufgebaut, mit dem Unterschied, dass anstelle der Rollen stelzenartige Füße 44 vorgesehen sind. Die Füße 44 sind so hoch ausgebildet, dass z.B. ein fahrerloses bzw. führerloses Transportsystem 45 unter das Behältergestell 43 fahrbar ist, um diesen zu tauschen. Aus den Figuren 9a und 10a läßt sich weiterhin entnehmen, dass jedem der Fächer 35 korrespondierend zu den geneigten Bodenelementen 40 Führungsschienen 46 zugeordnet sind.

Die Handhabungsvorrichtung 11 ist universell derart ausgebildet, dass Behälter 13 an einer glatten Teilfläche auf der aus dem geöffneten Speicher 15 bis 18 weisende Seite greifbar sind. Üblicherweise weist jeder Behälter 13 an einer Stirnseite, die aus dem Speicher 15 bis 18 herausweist, mindestens eine kleine Angriffsfläche auf, an die Greifelemente angreifen können. Im Folgenden wird die erfindungsgemäße Handhabungsvorrichtung 11 als Bestandteil der Anordnung 10 näher erläutert.

Die Handhabungsvorrichtung 11 weist im Wesentlichen einen Handhabungsarm 47 sowie ein Greifelement 48 auf. Der Handhabungsarm 47 ist in üblicher Weise ausgebildet und in mehrere Freiheitsgraden bewegbar, und zwar sowohl in linearer Richtung als auch schwenkbar. Das Greifelement 48 ist an einem freien Ende 49 des Handhabungsarms 47 bewegbar angeordnet. Das Greifelement 48 selbst besteht im Wesentlichen aus einer gestellartigen Linearführung 50, einem bewegbaren Tragelement 51 sowie einem Halteelement 52 für die Behälter 13. Des Weiteren weist das Greifelement 48 einen Antrieb 53 für die Linear- und Schwenkbewegung des Greifelementes 48 auf.

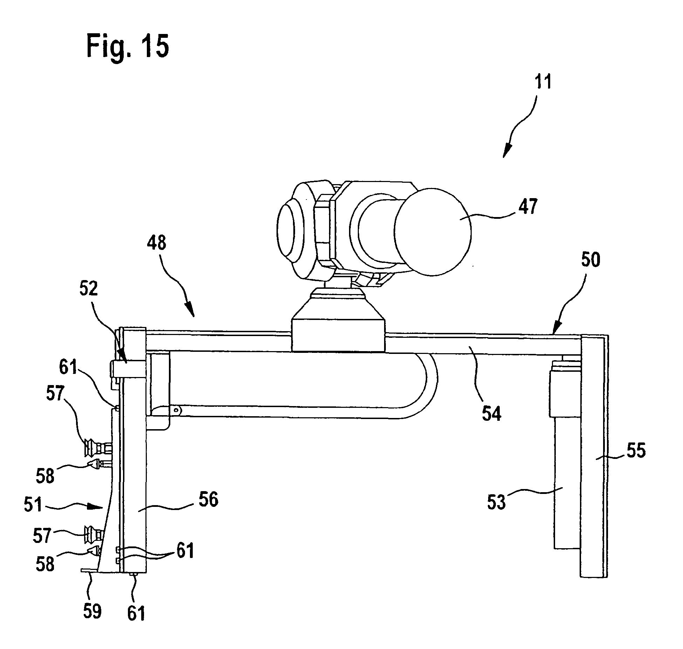

Die Linearführung 50 weist eine etwa U-förmige Gestalt auf. Hierzu weist eine Laufschiene 54 an entgegengesetzten Enden zwei Gestellelemente 55 und 56 auf, die sich ausgehend von der Laufschiene 54 nach unten erstrecken. Das Tragelement 51 ist auf der Laufschiene 54 zum Greifen, Herausziehen und Hineinschieben der Behälter 13 aus einem Speicher 15 bis 18 bzw. in einen Speicher 15 bis 18 verfahrbar. Das Greifelement 48 ist derart ausgebildet, dass Behälter 13 an glatten Teilflächen auf der aus dem Speicher 15 bis 18 weisenden Seite greifbar sind. Hierzu sind an dem Greifelement 48 Elemente zum Drücken und/oder Ziehen der Behälter 13 angeordnet. Die Elemente zum Ziehen der Behälter 13 sind als Saugnäpfe 57 ausgebildet. Vorzugsweise zwei Saugnäpfe 57 sind beabstandet zueinander und übereinander an dem Tragelement 51 angeordnet, und zwar auf der den Behältern 13 zugewandten Seite. Jedem Saugnapf 57 ist ein Pufferelement 58 zum Drücken der Behälter 13 zugeordnet, so dass zwei Pufferelemente 58 beabstandet zueinander und übereinander am Tragelement 51 angeordnet sind (siehe z.B. Figur 15). Die Saugnäpfe 57 sind an nicht dargestellte Saugluftleitungen angeschlossen. Die Pufferelemente 58 sind aus elastischem Material nahezu starr ausgebildet.

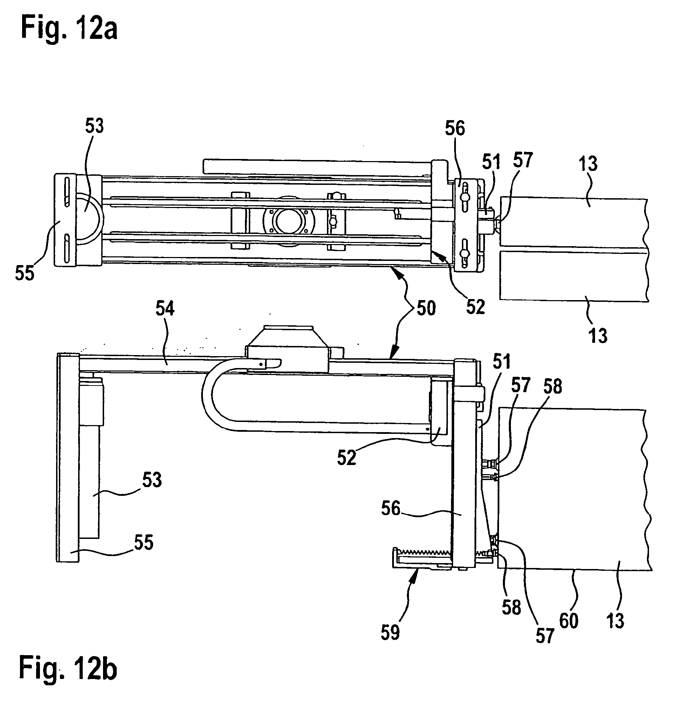

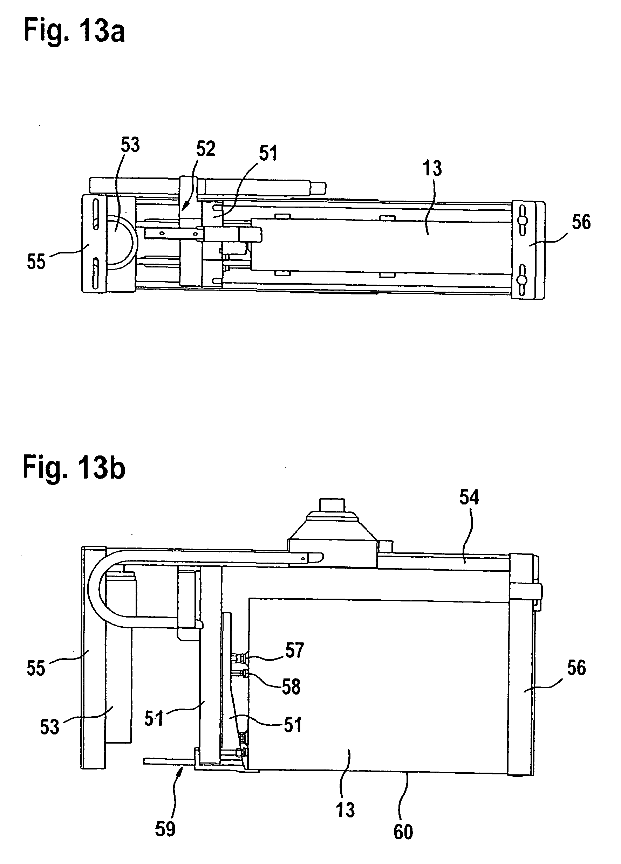

Am Tragelement 51 ist ein den Boden eines Behälters 13 abstützendes Stützelement 59 angeordnet. In der Figur 15 ist das Stützelement 59 z.B. feststehend ausgebildet und ragt vom Tragelement 51 in die gleiche Richtung wie die Saugnäpfe 57 und Pufferelemente 58. Das Stützelement 59 kann aber auch bewegbar bzw. ausweichbar ausgebildet sein (siehe z.B. Figur 12b). Das bewegbare Stützelement 59 ist federbelastet und in einer Ausweichposition gegen die Federkraft hinter die Saugnäpfe 57 und Pufferelemente 58 zurückgezogen (Figur 12b). In einer Stützposition (siehe z.B. Figur13b) ist das Stützelement 59 unterhalb des Bodens 60 des Behälters 13 positioniert.

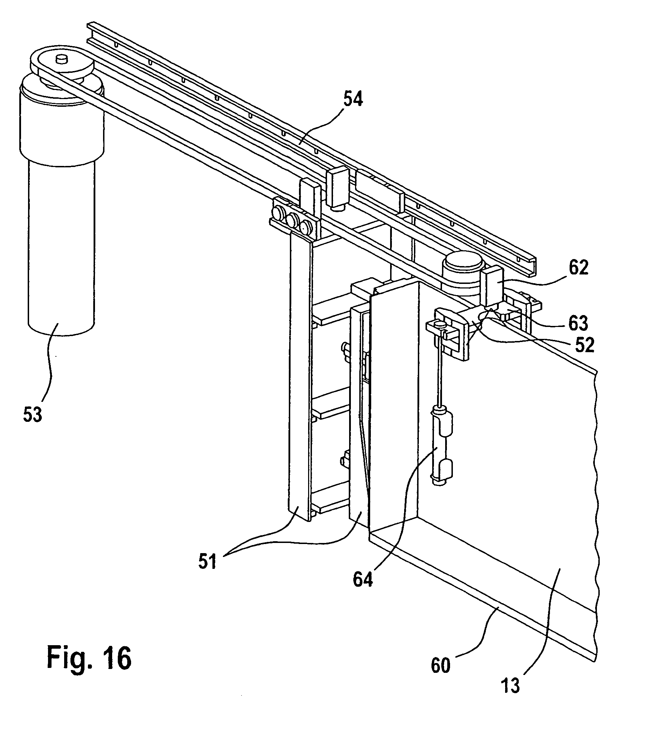

Am Greifelement 48, vorzugsweise im Bereich des Tragelementes 51 auf der den Behältern 13 zugewandten Seite ist mindestens ein Sensorelement 61 angeordnet. Vorzugsweise sind mehrere, insbesondere drei Sensorelemente 61 vorgesehen. Die Sensorelemente 61 dienen insbesondere der Positionserkennung der Behälter -Boden-Ebene sowie der Behälter-Rückwand-Ebene. Des Weiteren ist an Greifelement 48 mindestens ein Überwachungsmittel, vorzugsweise eine Kamera 62 angeordnet. Die Kamera 62 ist am Halteelement 52 angeordnet, und zwar derart, dass eine Inspektion in den Behälter 13 hinein zu Zwecken der Überwachung des Inhaltes sowie des Zustandes des Inhaltes sichergestellt ist (siehe z.B. Figur 16).

Der Figur 16 ist weiterhin zu entnehmen, dass das Halteelement 52 eine Andrückplatte 63 umfaßt, die mittels Druckzylindern 64 bewegbar ist. Die Andrückplatte 63 dient zur Fixierung der Behälter 13 beim Transport derselben. Der Behälter 13 wird beim Transport zwischen der Andrückplatte 63 und einem Steg 65 eingeklemmt, wobei sich der Behälter 13 zusätzlich auf der dem Steg65 gegenüberliegenden Seite auf dem Stützelement 59 abstützt. Die Andrückplatte 63 steht in Wirkverbindung mit einer weiteren Platte 66, die ebenfalls durch die Druckzylinder 64 betätigbar ist. Die Platte 66 dient zur Fixierung der Artikel innerhalb der Behälter 13.

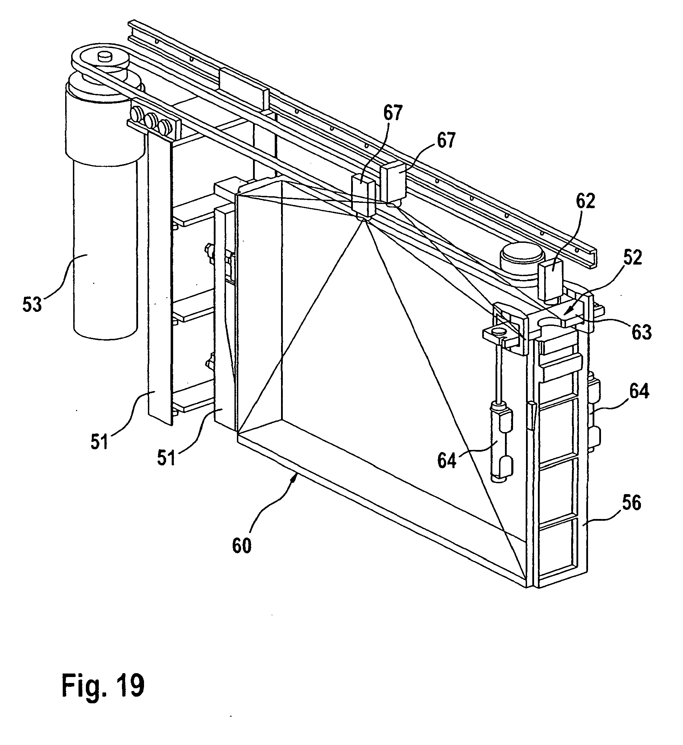

In einer weiteren Ausführungsform gemäß Figur 19 sind mehrer Kameras 67 angeordnet, die zur Erfassung unerwünschter Bewegungen der Artikel innerhalb der Behälter 13 sowie der optischen Qualitätskontrolle dienen. Hierzu sind die Kameras 67 oberhalb der zu transportierenden Behälter 13 angeordnet, so dass eine Inspektion von oben erfolgen kann.

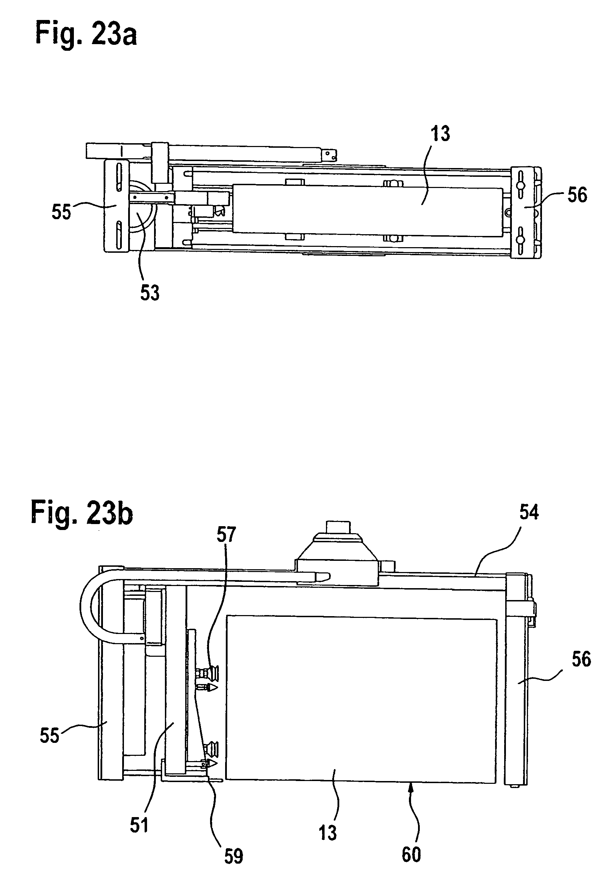

Wesentliche Verfahrensprinzipien, insbesondere die Vorgänge zum Entnehmen von Behältern 13 aus den Speichern 15 bis 18 werden im Folgenden beschrieben: Beim Einsatz eines Containerwagens 41 als Speicher 15 bis 18 wird das Greifelement 48 zum Entnehmen eines z.B. vollen Behälters 13 aus einem Fach 35 des Containers 42 vor dem Fach 35 positioniert. Die Saugnäpfe 57 tauchen in das Fach 35 ein. Das Stützelement 59 ist dabei gegen die Federkraft zurückgedrückt, so dass sie im Zustand des Eintauchens nicht als Stützelement 59 sondern als Anschlag wirkt. Das Greifelement 48 kann also ohne Kollision mit den Bodenelementen 40 des Faches 35 in das Fach 35 eintauchen (siehe z.B. Figur12b). Sobald der Behälter 13 mindestens teilweise aus dem Fach 35 gezogen ist, wird das Stützelement 59 durch die Federkraft in die Stellung unterhalb des Bodens 60 des Behälters 13 gebracht. (siehe z.B. Figur 13b). Der vollständig aus dem Fach 35 entnommene Behälter 13 wird dann durch den Handhabungsarm 47 z.B. in den Bereich der Vorrichtung 12 zum Entleeren des Behälters 13 bewegt. Sobald sich der noch im Greifelement 48 befmdliche Behälter 13 oberhalb der Bandstation 31 befindet, öffnet sich das Greifelement 48, indem die Fixierung des Behälters 13 sowie die Unterstützung u.a. durch das Stützelement 59 gelöst werden. Die Figur 23 zeigt das Greifelement 48 in offenem Zustand direkt nach der Übergabe an die Bandstation 31 bzw. kurz vor der Aufnahme eines z.B. entleerten Behälters 13 von der unteren Bandstation 32. Das Schließen des Greifelementes 48 erfolgt in umgekehrter Reihenfolge wie das Öffnen.

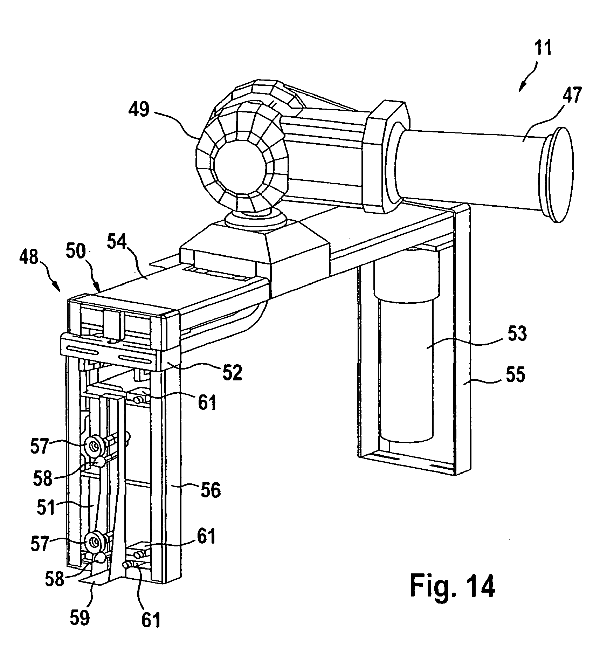

Das Entnehmen eines Behälters 13 z.B. aus einem Rollwagen 36 mit einem Greifelement 48 mit festem, unbeweglichen Stützelement 59 läuft wie folgt ab: Figur 14 zeigt die Suchfahrt des Greifelementes 48 vor einem Fach 35 mit einem Behälter 13.

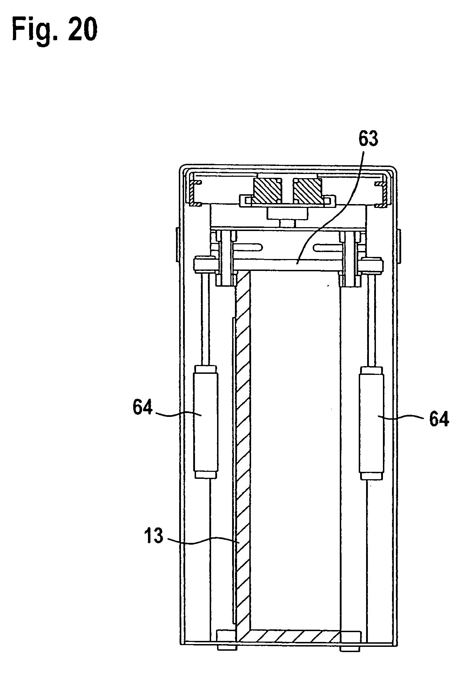

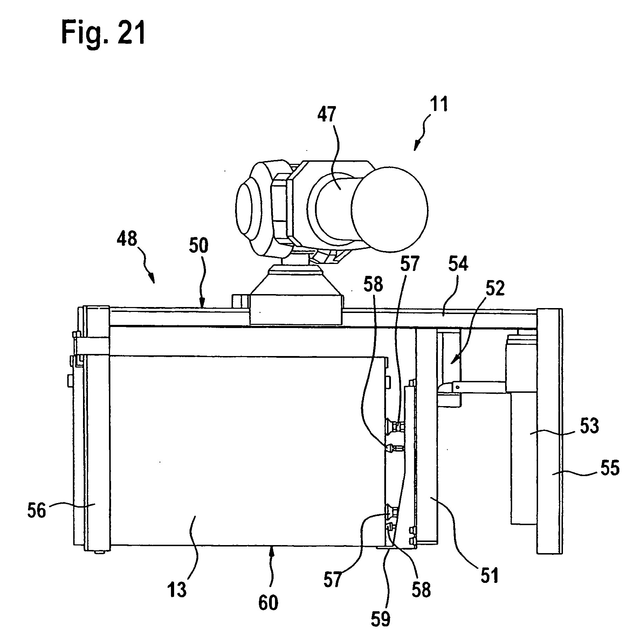

Mittels der Sensorelemente 61 werden die Positionen der Behälter-Boden-Ebene sowie der Behälter-Rückwand-Ebene bestimmt (siehe auch Figur 15). Sobald das Greifelement 48 vor einem Fach 35 korrekt positioniert ist, fährt das Greifelement 48 soweit in Richtung des Behälters 13 vor, dass das Stützelement 59 in das Fach 35 hinein unter den Boden 60 des Behälters 13 greift, so dass der Behälter 13 auf dem Stützelement 59 aufliegt. Durch Zurückziehen des Greifelementes 48 wird der Behälter 13 aus dem Fach gezogen. In Figur 16 ist der Behälter 13 bereits teilweise aus dem Fach 35 gezogen und liegt nur noch mit dem distalen Ende auf dem Bodenelement 40 des Faches 35 auf. Beim Herausziehen des Behälters 13 wird dieser auf dem Steg 65 abgestützt und durch das Gestellelement 56 geführt (In Figur 16 ist das Gestellelement 56 der Übersichtlichkeit halber weggelassen). Dabei wird zeitgleich durch die Kamera 62 die Lage der Artikel im Behälter 13 bzw. die vollständige Entleerung des Behälters 13 überprüft. Der Behälter 13 wird während des Transports durch seinen eigenen Boden 60 positioniert. Die hintere Seitenwand wird von einer Platte zwischen seitlichen Führungen angedrückt. (siehe auch den Querschnitt gemäß Figur 20). Die vordere Seitenwand wird durch die Saugnäpfe 57 gehalten und durch das feste Stützelement 59 von unten unterstützt. Die Figur 21 zeigt das Greifelement 48 mit dem festen Stützelement 59 im Transportzustand. Sobald das Greifelement 48 seine Position zur Abgabe des Behälters 13 über der Bandstation 31 erreicht hat, wird der Behälter 13 abgesetzt und das Greifelement 48 geöffnet. Hiezu wird die Andrückplatte 63 gelöst und leicht angehoben. Der Behälter 13 steht auf der Bandstation 31. Das Tragelement 51 bewegt sich von der Behälterseitenwand weg und die Handhabungsvorrichtung 11 leitet die entgegengesetzte Bewegung ein, allerdings in einem geringeren Maße als das Tragelement 51, so dass das Greifelement 48 geöffnet ist. Nunmehr kann die Handhabungsvorrichtung 11 verschwenken und einen anderen Behälter 13 in umgekehrter Funktionsfolge aufnehmen.

## Patentansprüche

1. Handhabungsvorrichtung, im Wesentlichen umfassend einen Handhabungsarm (47), der in mehreren Freiheitsgraden bewegbar ausgebildet ist, ein Greifelement (48), das am freien Ende (49) des Handhabungsarms (47) bewegbar angeordnet ist und mindestens eine Linearführung (50) mit einem auf der Linearführung bewegbaren Tragelement (51) sowie ein Halteelement (52) für die Behälter (13) aufweist, und einen Antrieb (53) zum Bewegen des Tragelementes (51), wobei das Greifelement (48) derart ausgebildet ist, dass Behälter (13) an glatten Teilflächen ihrer aus einem Speicher (15 bis 18) weisenden Schmalseite greifbar sind, wobei das Greifelement (48) mindestens einen, vorzugsweise zwei Saugnäpfe (57), insbesondere zum Ziehen der Behälter (13) aufweist, **dadurch gekennzeichnet, dass** das Greifelement mindestens ein, vorzugsweise zwei Pufferelemente (58), insbesondere zum Drücken der Behälter (13), aufweist, wobei jeder Saugnapf (57) und jedes Pufferelement (58) am Tragelement (51) auf der den Behältern (13) zugewandten Seite angeordnet ist, und dass am Tragelement (51) ein den Boden (60) der Behälter (13) abstützendes Stützelement (59) angeordnet ist, wobei das Stützelement (59) bewegbar ausgebildet ist.

2. Handhabungsvorrichtung nach Anspruch 1, **dadurch gekennzeichnet, dass** das Greifelement (48) an der den Behältern (13) zugewandten Seite Elemente zum Drücken und/oder Schieben der Behälter (13) aufweist.

3. Handhabungsvorrichtung nach Anspruch 1 oder 2, **dadurch gekennzeichnet, dass** das Stützelement (59) federbelastet ist.

4. Handhabungsvorrichtung nach einem der Ansprüche 1 bis 3, **dadurch gekennzeichnet, dass** am Tragelement (51) auf der den Behältern (13) zugewandten Seite mindestens ein, vorzugsweise mehrere Sensorelemente (61) angeordnet sind.

5. Handhabungsvorrichtung nach einem der Ansprüche 1 bis 4, **dadurch gekennzeichnet, dass** am Greifelement (48), vorzugsweise im Bereich des Halteelementes (52) für die Behälter (13), ein Überwachungselement für die Überwachung des Inhaltes und des Zustandes des Inhaltes angeordnet ist.

6. Handhabungsvorrichtung nach einem der Ansprüche 1 bis 5, **dadurch gekennzeichnet, dass** mindestens im Bereich des Halteelementes (52) für die Behälter (13) mindestens ein zusätzliches Fixierungselement für den Behälter (13) und/oder den Inhalt der Behälter (13) angeordnet ist.

## Claims

1. Handling device, essentially including a handling arm (47) which is designed to be movable in several degrees of freedom, a gripping element (48) which is arranged movably at the free end (49) of the handling arm (47), and at least one linear guide (50) with a carrying element (51) movable on the linear guide as well as a holding element (52) for the receptacles (13), and a drive (53) for moving the carrying element (51), wherein the gripping element (48) is designed in such a way that receptacles (13) can be gripped at smooth partial surfaces of its side facing out of a reservoir (15 to 18), wherein the gripping element (48) has at least one, preferably two suction cups (57), in particular for pulling the receptacles (13), **characterised in that** the gripping element (48) has at least one, preferably two buffer elements (58), in particular for pushing the receptacles (13), wherein each suction cup (57) and each buffer element (58) is arranged on the carrying element (51) on the side facing towards the receptacles (13), and **in that** a supporting element (59) supporting the bottom (60) of the receptacles (13) is arranged on the carrying element (51), wherein the supporting element (59) is movable.

2. Handling device according to claim 1, **characterised in that** the gripping element (48) on the side facing towards the receptacles (13) has elements for pushing and/or sliding the receptacles (13).

3. Handling device according to claim 1 or 2, **characterised in that** the supporting element (59) is spring-loaded.

4. Handling device according to any one of claims 1 to 3, **characterised in that** on the carrying element (51) on the side facing towards the receptacles (13) are arranged at least one, preferably several sensor elements (61).

5. Handling device according to any one of claims 1 to 4, **characterised in that** on the gripping element (48), preferably in the region of the holding element (52) for the receptacles (13), is arranged a monitoring element for monitoring the contents and the state of the contents.

6. Handling device according to any one of claims 1 to 5, **characterised in that** at least in the region of the holding element (52) for the receptacles (13) is arranged at least one additional fixing element for the receptacle (13) and/or for the contents of the receptacles (13).

## Revendications

1. Dispositif manipulateur comprenant essentiellement un bras manipulateur (47) qui est conçu pour être mobile selon plusieurs degrés de liberté, un élément preneur (48), qui est monté mobile à l'extrémité libre (49) du bras manipulateur (47) et présente au moins un guidage linéaire (50) comportant un élément porteur (51) mobile sur le guidage linéaire ainsi qu'un élément de maintien (52) des récipients (13), et un entraînement (53) servant à déplacer l'élément porteur (51), l'élément preneur (48) étant exécuté de telle manière que des récipients (13) peuvent être saisis au niveau de surfaces partielles lisses de leur petit côté qui pointe hors d'un magasin (15 à 18), l'élément preneur (48) présentant au moins une ventouse, de préférence deux ventouses (57), en particulier pour tirer les récipients (13), **caractérisé en ce que** l'élément preneur présente au moins un, de préférence deux, éléments tampons (58), en particulier pour pousser les récipients (13), chaque ventouse (57) et chaque élément tampon (58) étant montés sur l'élément porteur (51), sur le côté dirigé vers les récipients (13), et **en ce que** sur l'élément porteur (51) est monté un élément de soutien (59) qui soutient le fond (60) des récipients (13), l'élément de soutien (59) étant exécuté pour être mobile.

2. Dispositif manipulateur selon la revendication 1, **caractérisé en ce que** l'élément preneur (48) présente, sur le côté dirigé vers les récipients (13), des éléments servant à pousser et/ou à déplacer les récipients (13).

3. Dispositif manipulateur selon la revendication 1 ou 2, **caractérisé en ce que** l'élément de soutien (59) est chargé par ressort.

4. Dispositif manipulateur selon l'une des revendications 1 à 3, **caractérisé en ce qu'**au moins un, de préférence plusieurs, éléments détecteurs (61) est (sont) monté(s) sur l'élément porteur (51), sur le côté dirigé vers les récipients (13),

5. Dispositif manipulateur selon l'une des revendications 1 à 4, **caractérisé en ce qu'**est monté sur l'élément preneur (48), de préférence dans la région de l'élément de maintien (52) des récipients (13), un élément de surveillance destiné à la surveillance du contenu et de l'état du contenu.

6. Dispositif manipulateur selon l'une des revendications 1 à 5, **caractérisé en ce qu'**au moins dans la région de l'élément de maintien (52) des récipients (13) est monté au moins un élément d'immobilisation supplémentaire du récipient (13) et/ou du contenu des récipients (13).
